# EUROPÄISCHE PATENTSCHRIFT

(11) **EP 0 733 538 B1**
(45) Veröffentlichungstag und Bekanntmachung des Hinweises auf die Patenterteilung: **24.09.1997**
(21) Anmeldenummer: 95104193.8
(22) Anmeldetag: 22.03.1995
(51) Int. Cl.: B62D 25/04, B62D 29/00

(54) **Wagenkasten für Kraftfahrzeuge, insbesondere Personenkraftwagen**
Frame for motor vehicles, especially for passenger cars
Carosserie pour véhicules à moteur, en particulier pour voitures automobiles

(43) Veröffentlichungstag der Anmeldung: 25.09.1996
(73) Patentinhaber: Dr.Ing.h.c. F. Porsche Aktiengesellschaft, 70435 Stuttgart (DE); REGIE NATIONALE DES USINES RENAULT S.A., 92109 Boulogne Billancourt Cédex (FR)
(72) Erfinder: Vlahovic, Josip, D-74321 Bietigheim-Bissingen (DE)

(56) Entgegenhaltungen:
- EP-A- 0 461 346
- EP-A- 0 568 251
- WO-A-80/02676
- WO-A-90/14981
- WO-A-92/11169
- FR-A- 2 531 672

## Beschreibung

Die Erfindung bezieht sich auf einen Wagenkasten für Kraftfahrzeuge, insbesondere Personenkraftwagen, mit einer aus Hohlprofilen zusammengesetzten Trägerstruktur, gemäß dem Oberbegriff des Patentanspruchs 1.

Bei einem bekannten Wagenkasten der eingangs genannten Gattung (EP 0 146 716 B 1) wird die tragende Struktur aus Hohlprofilen und Knotenelementen gebildet.

Die durch die Trägerstruktur begrenzten Öffnungen zur Aufnahme der Türen bzw. Fenster werden im wesentlichen aus stumpf aneinanderstoßenden Hohlprofilen gebildet. Diese Öffnungen werden innenseitig mit Dichtungsprofilen versehen. Dabei stellen die Ecken der Öffnungen Problemzonen für die Anbringung des Dichtungsprofils dar. Ein durchlaufendes Dichtungsprofil gewährleistet keine Abdichtung des Eckbereiches, da das Dichtungsprofil einen gewissen minimalen Krümmungsradius erfordert. Es sind zwar rechtwinkelig zusammentreffende und miteinander verschweißte Dichtungsprofile herstellbar, diese sind jedoch kostenintensiv in der Herstellung und genügen nicht immer den Anforderungen des optischen Erscheinungsbildes.

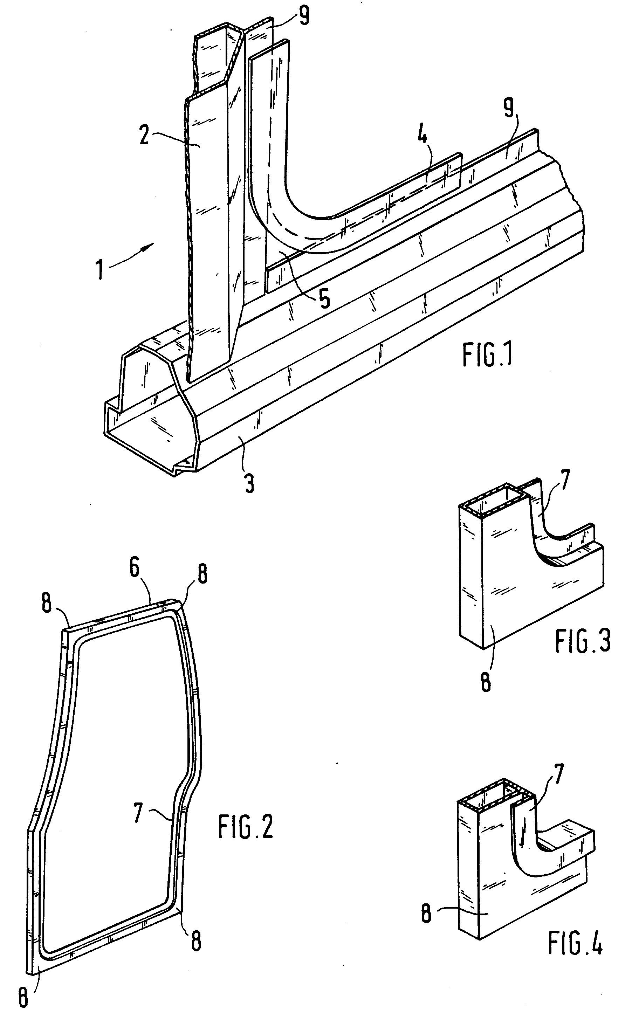

Es ist auch bekannt, in der Öffnung der Trägerstruktur einen flachen Aufnahmerahmen für das Dichtungsprofil zu befestigen (siehe Figur 1), dieser löst jedoch nicht das Problem der Abdichtung in den Eckbereichen.

Die WO-A-90/14981 offenbart einen aus Hohlprofilen und Knotenelementen zusammengesetzten Wagenkasten, wobei ein offenes Blechteil diejenigen Hohlprofile mit ihren Eckbereichen (Knotenelementen) abdeckt, die die Fenster- und Türöffnung bilden.

Aufgabe der Erfindung ist es, im Bereich der Öffnungen für Türen und Fenster an einer aus Hohlprofilen zusammengesetzten Trägerstruktur eines Wagenkastens solche Vorkehrungen zu treffen, daß Dichtungsprofile leicht anbringbar sind, eine sichere Abdichtung, insbesondere in den Eckbereichen, gewährleistet ist und das optische Erscheinungsbild den gestellten Anforderungen genügt.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß in die Öffnung der Trägerstruktur ein hohlprofilartiger Dichtungsrahmen eingesetzt wird, der einen Flansch zur Anbringung eines Dichtungsprofils aufweist, der derart gestaltet ist, daß eine leichte Anbringung von Dichtungsprofilen, speziell in den Eckbereichen, möglich ist und die problematischen Eckbereiche abdeckt.

Ein derartiger Dichtungsrahmen ist aus Hohlprofilen im Innenhochdruck-Umformverfahren sehr präzise herstellbar, so daß auch Maßabweichungen der Öffnungen der Rahmenstruktur, die durch Toleranzen der zu verbindenden Bauteile der Trägerstruktur und Verzug beim Schweißen auftreten, ausgeglichen werden.

Der präzise vorgefertigte Dichtungsrahmen kann in einem Arbeitsgang kostengünstig und einfach in der Öffnung der Trägerstruktur durch Kleben, Schweißen oder dgl. befestigt werden.

Der aus Leichtmetall (Aluminium oder eine Aluminiumlegierung) oder Stahl gefertigte Dichtungsrahmen weist ferner ein geringes Gewicht auf.

Ausführungsbeispiele der Erfindung sind in den Zeichnungen dargestellt und werden im folgenden näher beschrieben.

Es zeigt
Fig.1 einen Eckbereich einer Öffnung der Trägerstruktur und eine bekannte Aufnahme für das Dichtungsprofil,
Fig.2 einen hohlprofilartigen Dichtungsrahmen,
Fig.3 eine Eckausbildung einer ersten Profilform, und
Fig.4 eine Eckausbildung einer zweiten Profilform.

In Figur 1 ist der Ausschnitt einer Öffnung einer Trägerstruktur zu sehen, bei der zwei Hohlprofile 2,3 stumpf aneinander treffen. Bisher wurde zur Aufnahme eines Dichtungsprofils an den Hohlprofilen 2,3 ein flacher Rahmen 4 befestigt, der im Eckbereich 5 radienförmig ausgebildet ist und so die Aufnahme eines durchgehenden Dichtprofils ermöglichte. Diese Dichtprofilaufnahme läßt jedoch den problematischen Eckbereich 5 offen und macht eine gesonderte Abdeckung dieses Bereiches erforderlich.

Deshalb ist erfindungsgemäß vorgesehen anstelle des flachen Rahmens 4 einen hohlprofilartigen Dichtungsrahmen 6 anzubringen, wie er in Figur 2 gezeigt ist. Dieser Dichtungsrahmen weist an der Innenseite einen Flansch 7 für die Anbringung eines Dichtungsprofils auf und zeigt eine Eckausbildung 8, die die problematischen Eckbereiche der Öffnung der Trägerstruktur 1 voll abdeckt. Dieser hohlprofilartiger Dichtungsrahmen 6 ist an der Trägerstruktur 2,3 durch Schweißen, Kleben oder sonstige geeignete Verfahren befestigt. Die Fertigung des Dichtungsrahmens 6 erfolgt aus Hohlprofilen, wobei zunächst vier Winkelstücke gefertigt werden, deren Eckbereiche im Innenhochdruck-Umformverfahren aufgeblasen werden, anschließend werden diese vier Teilstücke miteinender verbunden und bilden den hohlprofilartigen Dichtungsrahmen 6. Der Dichtungsrahmen 6 kann auch aus zwei, drei oder mehreren Teilen zusammengesetzt sein.

Die Aufnahme für das Dichtungsprofil ist am Dichtungsrahmen 6 als Flansch 7 mit angeformt und kann, wie Figur 3 zeigt an der Dichtungsrahmeninnenseite in Öffnungsrichtung angebracht sein, kann jedoch auch wie Figur 4 zeigt, außen parallel zur Dichtungsrahmenseitenwand in entgegengesetzter Richtung verlaufen. Die zweite Ausführungsform ermöglicht eine größere Öffnung in der Trägerstruktur 2,3.

Ein derartiger hohlprofilartiger Dichtungsrahmen 6 kann sowohl für Türöffnungen als auch für Fensteröffnungen Anwendung finden, wobei der Dichtungsrahmen 6 auf Flansche 9 der Trägerstruktur 1 aufgesetzt und an diesen befestigt ist. Diese Flansche 9 sind der Öffnung der Trägerstruktur 2, 3 zugekehrt.

Der hohlprofilartige Dichtungsrahmen 6 ist aus Leichtmetall (Aluminium oder eine Aluminiumlegierung) oder Stahl gefertigt.

### Bezugszeichen:

- 1: Trägerstruktur
- 2: Hohlprofil
- 3: Hohlprofil
- 4: Rahmen
- 5: Eckbereich
- 6: Dichtungsrahmen
- 7: Flansch
- 8: Eckausbildung
- 9: Flansche der Trägerstruktur

## Patentansprüche

1. Wagenkasten für Kraftfahrzeuge, insbesondere Personenkraftwagen, mit einer aus Hohlprofilen (2, 3) zusammengesetzten Trägerstruktur (1), bei der die Öffnungen zur Aufnahme der Türen und Fenster aus stumpf aneinandergesetzten Hohlprofilen (2, 3) gebildet sind, **dadurch gekennzeichnet**, daß im Bereich der Öffnungen für die Türen und Fenster jeweils in die Öffnung der Trägerstruktur (1) ein hohlprofilartiger Dichtungsrahmen (6) eingesetzt ist, der die Eckbereiche (5) der stumpf aneinandergesetzten Hohlprofile (2, 3) abdeckt und einen Flansch (7) zur Anbringung eines Dichtprofils aufweist.

2. Wagenkasten nach Anspruch 1, **dadurch gekennzeichnet**, daß der Dichtungsrahmen (6) mehrteilig ausgebildet ist, wobei die einzelnen Teile durch Strangpreßprofile gebildet werden.

3. Wagenkasten nach den Ansprüchen 1 und 2, **dadurch gekennzeichnet**, daß im Verbindungsbereich von jeweils zwei stumpf aneinandergesetzten Hohlprofilen (2, 3) der Dichtungsrahmen (6) durch Innenhochdruck-Umformen aufgeblasene Eckbereiche (5) aufweist.

4. Wagenkasten nach Anspruch 1, **dadurch gekennzeichne**t, daß der Dichtungsrahmen (6) auf der Öffnung zugekehrte Flansche (9) der Trägerstruktur (1) aufgesetzt und an diesen befestigt ist.

5. Wagenkasten nach Anspruch 4, **dadurch gekennzeichnet**, daß der Dichtungsrahmen (6) durch Kleben, Schweißen oder dgl. mit der Trägerstruktur (1) verbunden ist.

6. Wagenkasten nach Anspruch 1, **dadurch gekennzeichnet**, daß der Flansch (7) zur Anbringung des Dichtungsprofils von einem mittleren Bereich einer Begrenzungswand des Dichtungsrahmens (6) weggeführt ist und mit seinem freien Ende der Öffnung zugekehrt ist.

7. Wagenkasten nach Anspruch 1, **dadurch gekennzeichnet**, daß in Querrichtung seitlich versetzt zum Hohlprofilelement des Dichtungsrahmens (6) ein im Querschnitt winkelförmiger Flansch (7) zur Anbringung des Dichtungsprofils ausgebildet ist dessen freies Ende der Öffnung abgewandt ist.

8. Wagenkasten nach den Ansprüchen 6 und 7, **dadurch gekennzeichnet**, daß die Eckbereiche (5) des Dichtungsrahmens (6) an der Aufnahmeseite des Dichtungsprofils radienförmig und an der der Trägerstruktur (1) zugewandten Seite entsprechend dem Winkeverlauf der Trägerstruktur (1) ausgebildet sind.

## Claims

1. A frame for motor vehicles, in particular passenger cars, with a support structure (1) which is formed from hollow sections (2, 3) and in which the openings for receiving the doors and windows are formed from butt-jointed hollow sections (2, 3), **characterized in that** in the region of the openings for the doors and windows a sealing frame (6) in the manner of a hollow section is inserted into the respective opening in the support structure (1), the said sealing frame (6) covering the corner areas (5) of the butt-jointed hollow sections (2, 3) and having a flange (7) for providing a sealing section.

2. A frame according to Claim 1, **characterized in that** the sealing frame (6) is made in several parts, the individual parts being formed by extruded sections.

3. A frame according to Claims 1 and 2, **characterized in that** in the connexion region of two respective butt-jointed hollow sections (2, 3) the sealing frame (6) has corner areas (5) inflated by internal-high-pressure shaping.

4. A frame according to Claim 1, **characterized in that** the sealing frame (6) is mounted on flanges (9) of the support structure (1) facing the opening and is secured to the said flanges (9).

5. A frame according to Claim 4, **characterized in that** the sealing frame (6) is joined to the support structure (1) by adhesion, welding or the like.

6. A frame according to Claim 1, **characterized in that** the flange (7) for providing the sealing section is directed away from a central region of a boundary wall of the sealing frame (6) and faces the opening with its free end.

7. A frame according to Claim 1, **characterized in that** a flange (7) angled in cross-section for providing the sealing section, the free end of which is remote from the opening, is formed laterally offset in the transverse direction with respect to the hollow-section member of the sealing frame (6).

8. A frame according to Claims 6 and 7, **characterized in that** the corner areas (5) of the sealing frame (6) are formed radially on the receiving side of the sealing section and corresponding to the angular shape of the support structure (1) on the side facing the support structure (1).

## Revendications

1. Carrosserie pour véhicules automobiles, en particulier voitures particulières, avec une structure support (1) constituée de profilés creux (2, 3), structure pour laquelle les ouvertures destinées à recevoir les portes et les fenêtres sont constituées de profilés creux (2, 3) appliqués les uns aux autres bout-à-bout, caractérisée en ce que, dans la zone des ouvertures destinées au portes et aux fenêtres, est respectivement inséré dans l'ouverture de la structure support (1), un cadre d'étanchéité (6), du genre d'un profilé creux, qui couvre les zones d'angle (7) des profilés creux (2, 3) appliqués les uns autres bout-à-bout et présente un rebord (7) destiné à permettre le montage d'un profilé d'étanchéité.

2. Carrosserie selon la revendication 1, caractérisée en ce que le cadre d'étanchéité (6) est réalisé en plusieurs parties, les différentes parties étant constituées par des profilés venant d'extrusion.

3. Carrosserie selon les revendications 1 et 2, caractérisée en ce que le cadre d'étanchéité (6) présente, dans la zone de liaison de paires de profilés creux (2; 3) appliqués les uns aux autres bout-à-bout, des zones d'angle (5) expansées par gonflage-extension, par un formage conduit sous haute pression intérieure.

4. Carrosserie selon la revendication 1, caractérisée en ce que le cadre d'étanchéité (6) est appliqué sur les rebord (9), tournés vers l'ouverture, de la structure support la piste de démarrage/arrêt(1) et est fixé à ceux-ci.

5. Carrosserie selon la revendication 4, caractérisée en ce que le cadre d'étanchéité (6) est relié à la structure support (1) par collage, soudage ou analogue.

6. Carrosserie selon la revendication 1, caractérisée en ce que le rebord (7) destiné au montage du profilé d'étanchéité est guidé à distance d'une zone centrale d'une paroi de limitation du cadre d'étanchéité (6) et est tourné vers l'ouverture par son extrémité libre.

7. Carrosserie selon la revendication 1, caractérisée en ce qu'un rebord (7) à section transversale à forme angulaire est réalisé décalé latéralement dans la direction transversale par rapport à l'élément profilé creux du cadre d'étanchéité (6), afin de permettre le montage du profilé d'étanchéité, dont l'extrémité libre est opposé à l'ouverture.

8. Carrosserie selon la revendication 6 ou 7, caractérisée en ce que les zones d'angle (5) du cadre d'étanchéité (6) sont réalisées, du côté réception du profilé d'étanchéité, en forme de rayons et, du côté tourné vers la structure support (1), de manière à correspondre à l'allure angulaire de la structure support (1).
